# EUROPÄISCHE PATENTANMELDUNG

(11) **EP 4 006 863 A2**
(43) Veröffentlichungstag der Anmeldung: **01.06.2022**
(21) Anmeldenummer: 21209438.7
(22) Anmeldetag: 20.11.2021
(51) Int. Cl.: G08C 17/02, H04B 1/69, H04Q 9/00

(54) **FUNKSONDE UND VERFAHREN ZUR SICHEREN ÜBERTRAGUNG VON MESSSIGNALEN AUS EINER UNTERIRDISCHEN BEHÄLTERANLAGE UND DEREN VERWENDUNG AN EINEM UNTERIRDISCHEN TANK**

(30) Priorität: 26.11.2020 DE 102020131354
(71) Anmelder: Innotas Produktions GmbH, 02763 Zittau (DE)
(72) Erfinder: Heiland, Klaus-Dieter, 15754 Heidesee (DE); Müller, Norbert, 01157 Dresden (DE); Merten, Klaus-Peter, 15230 Frankfurt (DE); Rundfeldt, Andreas, 15711 Königs Wusterhausen (DE); Winkler, Kai, 02763 Zittau (DE); Fritzsche, Michael, 02785 Olbersdorf (DE)
(74) Vertreter: Querner, Yvonne Anne

(57) **Zusammenfassung**

Die Erfindung betrifft eine Funksonde und ein Verfahren zur sicheren Übertragung von Messsignalen aus einer unterirdischen Behälteranlage, sowie deren Verwendung an einem unterirdischen Tank. Die Funksonde weist mindestens einen Sensor zur Aufnahme von Messdaten, ein Modem zur Übertragung von digitalen Signalen an ein oberirdisches Gateway, einen Mikro-Controller zur Steuerung des mindestens einen Sensors und des Modems sowie eine autarke Stromversorgung auf. Die Aufgabe der Erfindung eine Funksonde anzugeben, die für den unterirdischen Einsatz, insbesondere in Erdschächten und Erd-Domen geeignet ist und eine sichere Übertragung von Messsignalen insbesondere aus einer unterirdischen Behälteranlage gewährleistet, wird dadurch gelöst, dass das Modem ausgebildet ist mittels einer Punkt-zu-Punkt-Übertragung mit Frequenzspreizung ein schmalbandiges Messdatensignal des Sensors in ein Signal mit größerer Bandbreite umzuwandeln und an das oberirdische Gateway zu übertragen, wobei die Frequenzspreizung durch eine Chirp-Spread Spektrum, CSS, Modulation erfolgt, wobei eine Kommunikation zwischen dem Übertragungsmodul und dem Gateway Netzprotokollunabhängig erfolgt.

## Beschreibung

Die Erfindung betrifft eine Funksonde zur sicheren Übertragung von Messsignalen aus einer unterirdischen Behälteranlage, wobei die Funksonde mindestens einen Sensor zur Aufnahme von Messdaten, ein Übertragungsmodul zur Übertragung von digitalen Signalen an ein oberirdisches Gateway, einen Mikro-Controller zur Steuerung des mindestens einen Sensors und des Modems sowie eine autarke Stromversorgung aufweist.

Die Erfindung betrifft auch ein Verfahren zur zuverlässigen drahtlosen Übertragung von Messsignalen aus einer unterirdischen Behälteranlage an ein oberirdisches Gateway, das dafür die erfindungsgemäße Funksonde nutzt.

Die Erfindung betrifft ebenso die Verwendung der erfindungsgemäßen Funksonde an einem unterirdischen Tank.

Lagerbehälter, auch als Tanks bezeichnet, für Flüssigkeiten und Gase werden zunehmend unterirdisch angelegt. War dies an Tankstellen für Otto- und Diesel-Kraftstoffe schon lange grundsätzlich üblich, so wurden Flüssiggaslagerbehälter (LPG - Liquified Petroleum Gas) oftmals auch oberirdisch errichtet.

Flüssiggaslagerbehälter-Anlagen sind überwachungsbedürftige Anlagen nach der Betriebssicherheitsverordnung, sie müssen daher vor der Inbetriebnahme und in bestimmten Fristen wiederkehrend durch eine zugelassene Überwachungsstelle geprüft werden. Auch die Bestimmungen der Betriebssicherheitsverordnung hinsichtlich des Explosionsschutzes sind zu beachten.

Der Füllstand der Lagerbehälter wird zunehmend mittels elektronischer Tanksonden fernüberwacht, um u. a. die Betankungs-Logistik effektiv zu gestalten.

Dabei ist zu berücksichtigen, dass derartige Tanksonden in einer explosionsgefährdeten Zone, einer sogenannten Ex-Zone, arbeiten und entsprechend eigensicher gemäß der europäischen ATEX-Richtlinie 2014/34/EU ausgelegt sein müssen. Die Ex-Zone kennzeichnet einen Bereich, in dem ständig oder langzeitig eine explosionsfähige Atmosphäre aus einem Gemisch von Luft mit brennbaren Substanzen in Form von Gas, Dampf oder Nebel vorhanden ist.

Aus dem Stand der Technik sind unterirdische Systeme bekannt, in dem die Füllstandsdaten einer eigensicheren Tanksonde über eine eigensichere Leitung aus einer unterirdischen Ex-Zone heraus an ein GSM-Übertragungs-Gateway in unmittelbarer Behälternähe geleitet und via Mobilfunk an eine Logistik-Leitstelle versendet werden. Diese Lösung ist grundsätzlich an allen Behälterstandorten einsetzbar aber mit erhöhtem Installationsaufwand verbunden. Insbesondere bei versiegelten Flächen, z. B. Tankstellen, Gartenanlagen oder Pflasterungen sind Nachrüstungen wegen der Tiefbaumaßnahmen zur Kabelverlegung sehr aufwändig oder z. T. ausgeschlossen.

An oberirdischen Behältern werden vielfach Funksonden eingesetzt, da dadurch aufwendige Verkabelungen mit entsprechenden Tiefbaumaßnahmen entfallen. Unter Funksonden werden Sonden verstanden, die ihre aufgenommenen Daten drahtlos übertragen können. Insbesondere bei der Nachrüstung bereits bestehender Tankanlagen ist dies von Vorteil. Auch für die Einhaltung des Explosionsschutzes ist eine Funksonde ohne Kabelzuführung technisch elegant. Bisher bekannte Funksonden nutzen übliche Übertragungsverfahren wie Direktfunk im ISM-Band (Industrial, Scientific and Medical Band) bei 433 MHz und 868 MHz sowie Mobilfunknetze wie LTE.

Problematisch ist ein zuverlässiger Betrieb mittels Datenfunk aus Erd-Domen- und -Schächten heraus, da das Funksignal einer hohen HF-Dämpfung unterliegt. Aufgrund des umgebenden Erdreichs, metall-ummantelter Dome, Stahl-Abdeckungen der Schächte und Überparkung der Schächte durch Fahrzeuge sind die oberirdisch eingesetzten Verfahren aus physikalischen Gründen nicht oder bestenfalls nur in Einzelfällen und sehr eingeschränkt verwendbar.

In der US 2006/0243345A1 wird eine Sonde für oberirdische Tanks beschrieben. Für die Übertragung wird eine übliche ISM- Kurzstreckenübertragung mit 2-FSK-Modulation verwendet. Diese Funksonde ist jedoch untauglich für den Einsatz in Erdschächten.

In der EP 3 462 144 A1 ist eine Funksonde mit WiFi-Übertragung offenbart. WiFi nutzt eine OFDM-Modulation (Orthogonal Frequency-Division Multiplexing). Diese Übertragungsart ist relativ resistent gegenüber Signalstörungen. Allerdings wird eine hohe Träger-Frequenz (2,5 GHz-Band oder 5,6 GHz-Band) genutzt, welche ein Überwinden der unterirdischen Dom- und Erd-Dämpfung verhindert.

Die meisten im Stand der Technik beschriebenen Funksonden fokussieren sich auf die Sensorik und deren technische Umsetzung in einem Sondengerät. Es ist hinreichend bekannt eine drahtlose Signalübertragung für lange oder kurze Distanzen zu verwenden. Für Anwendungen über der Erdoberfläche und in Gebäuden stehen dazu verschiedene Punkt-zu-Punkt-Technologien und Geräte (ISM, PMR) sowie netzbasierte Systeme zur Verfügung (GSM, UMTS, LTE, 5G, WiFi, NB-IoT, LoRa-WAN). Über der Erde funktionieren diese Technologien mehr oder weniger gut. Bringt man eine Funksonde, wie sie bisher im Stand der Technik beschrieben wurde aber in einen Erdschacht, ist die Dämpfung so hoch, dass eine fehlerfreie Datenübertragung über wenige Meter, heraus aus der Erde, bereits gar nicht, nur mit großer Unzuverlässigkeit oder hoher Sendeleistung möglich ist. D. h. eine Funktanksonde muss zum einen die Dämpfung der stahlummantelten und gedeckelten Erdschächte und zum anderen die kilometerlange Strecke zum nächsten Mobilfunk-Gateway überwinden können. Ohne abgesetzte Antenne, d. h. ohne Leitungsinstallation, ist dies nur bei sehr guter Netzausleuchtung und reduzierter Dämpfung, z. B. durch den Einsatz eines Kunststoff-Doms, also nur an ausgewählten Standorten, überhaupt denkbar. Der Nachteil hoher Sendeleistungen ist, dass derartige Funksonden große Energiespeicher erfordern, was in Ex-Zonen und bei langem autarken Betrieb problematisch ist.

Für den Einsatz einer Funk-Lösung sind daher stets zwei Problemstellungen zu berücksichtigen: Erstens, wie kann eine starke Schachtdämpfung überwunden werden? Zweitens, ist es möglich mit der gedämpften Restleistung zu einem IoT- oder LTE-Gateway sowie ins Internet zu gelangen?

Derzeit ist es üblich, unterirdische Sonden in einer Ex-Zone so einzusetzen, dass der Datenverkehr über eine eigensichere Leitung oder über ein integriertes Datenfunk-Modem mit abgesetzter (verkabelter) Außenantenne erfolgt. Eine eigensichere Leitung stellt aufgrund ihrer speziellen Konstruktion sicher, dass selbst im Fehlerfall kein unsicherer Zustand auftritt.

Die Stromversorgung der Sonde erfolgt dabei im Gerät selbst oder eigensicher von außen.

Sofern man nicht künstlich einen absolut HF-dichten Raum durch bewusste Schirmungsmaßnahmen herstellt, kann davon ausgegangen werden, dass natürlich vorkommende Schirmungsbedingungen die konventionelle HF-Ausbreitung sehr stark eindämmen aber üblicher Weise nicht zu 100% unterdrücken. Im Fall der Erd-Dome auf unterirdischen Behälteranlagen ist dies ebenfalls der Fall. Allerdings ist die Schirmung so stark, dass die üblicher Weise eingesetzten Funkverfahren nicht erfolgreich eingesetzt werden können, da sie für solche spezifischen Anwendungen auch nicht vorgesehen sind. Die Mobilfunknetze von GSM bis 5G, und auch die darauf aufbauenden NB-IoT-Netze versorgen Nutzer oberirdisch, sowohl außerhalb als auch innerhalb von Gebäuden und Transportmitteln. Aber schon bei Verkehrstunneln, Kellergeschossen oder Parkhausflächen unter der Erdoberfläche müssen in der Regel aktive Repeater und undichte HF-Kabel (Schlitzkabel) eingesetzt werden. Für eine Sonde im Erd-Dom verbietet sich natürlich ein solcher Aufwand.

Aus anderen Einsatzgebieten, z. B. im Bereich Wasser und Abwasser sind LoRa-Sonden zur drahtlosen Übertragung von Betriebsdaten aus unterirdischen Schächten bekannt. Allerdings werden diese immer in Verbindung mit einem LoRa-WAN-Gateway verwendet. LoRa-WAN steht für Long Range Wide Area Network und bedeutet bzw. ermöglicht ein energieeffizientes Senden von Daten über lange Strecken. Das LoRa-WAN-Gateway bildet hierbei die Schnittstelle zwischen der energieeffizienten LoRa-Funkübertragung und der leistungsstarken Anbindung zum Server, wobei dabei zwingend das Low-Power-Wireless-Netzprotokoll genutzt werden muss. Nachteilig sind aber die sehr unterschiedlichen Reichweiten aufgrund von Schachttiefen und Entfernung des Gateways sowie Feldbeeinträchtigungen durch Bebauung, Personen u. a. m., die zu erheblichen Übertragungsfehlern und entsprechend eingeschränkter Verwendung führen.

Es ist daher die Aufgabe der vorliegenden Erfindung eine Funksonde anzugeben, die für den unterirdischen Einsatz, insbesondere in Erdschächten und Erd-Domen geeignet ist und eine sichere Übertragung von Messsignalen insbesondere aus einer unterirdischen Behälteranlage gewährleistet.

Die Aufgabe der vorliegenden Erfindung wird durch eine Funksonde gemäß dem unabhängigen Vorrichtungsanspruch 1 gelöst.

Die erfindungsgemäße Funksonde zur sicheren Übertragung von Messsignalen aus einer unterirdischen Behälteranlage, weist mindestens einen Sensor zur Aufnahme von Messdaten, ein Übertragungsmodul zur Übertragung von digitalen Signalen an ein oberirdisches Gateway, einen Mikro-Controller zur Steuerung des mindestens einen Sensors und des Übertragungsmoduls sowie eine autarke Stromversorgung auf, wobei das Übertragungsmodul ausgebildet ist mittels einer Punkt-zu-Punkt-Übertragung mit Frequenzspreizung ein schmalbandiges Messdatensignal des Sensors in ein Signal mit größerer Bandbreite umzuwandeln und an das oberirdische Gateway zu übertragen, wobei die Frequenzspreizung durch eine Chirp-Spread Spektrum Modulation (CSS) erfolgt, wobei eine Kommunikation zwischen dem Übertragungsmodul und dem Gateway Netzprotokollunabhängig erfolgt.

Unter einer Netzprotokollunabhängigen Kommunikation wird verstanden, dass die von der Funksonde aufgenommenen und in ein elektrisches Signal umgewandelten Daten eines Sensors lediglich mittels der Punkt-zu-Punkt-Übertragung mit Frequenzspreizung durch die Chirp-Spread Spektrum Modulation (CSS) an ein Gateway übertragen werden. Diese Übertragung ist an kein spezielles Netzprotokoll gebunden. Das Gateway dient anschließend dazu, die übermittelten Daten sicher ins Internet für die Weiterverarbeitung und Weiterleitung entsprechend in dem dann genutzten Netzwerk zu übersetzen.

In einer Ausgestaltung der erfindungsgemäßen Funksonde, ist das Übertragungsmodul ein LoRa-Modem, jedoch ohne, dass das LoRa-Modem an ein LoRa-Netzprotokoll zur Kommunikation in einem LoRaWAN-Netzwerk gebunden ist.

Die Möglichkeit, Übertragungsmodul mit Chirp Spread Spektrum (CSS) Modulation für eine Punkt-zu-Punkt-Übertragung zu nutzen, beseitigt all die genannten Nachteile bisher bekanntermaßen eingesetzter Funk-Technologien in Funk-Tanksonden beim unterirdischen Einsatz. Ein LoRa-Modem hat die Funktionalität der CSS-Modulation integriert. Die bekannte Modulations-Technologie wird erfindungsgemäß daher in abgewandelter Form in einer neuartigen Weise eingesetzt, für die sie ursprünglich gar nicht vorgesehen und entwickelt wurde.

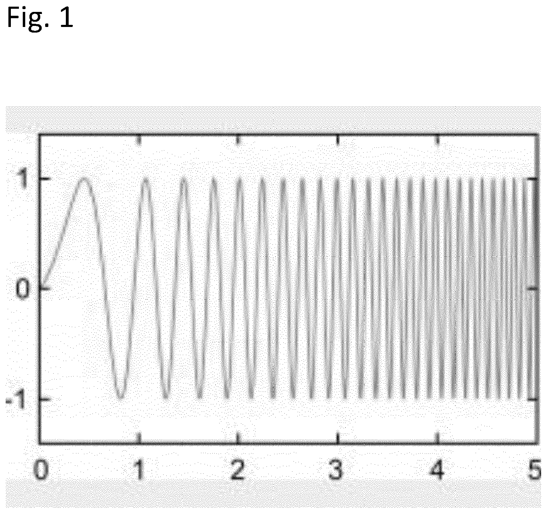

Denn eigentlich sind die bekannten Modulationsverfahren der Frequenzspreizung dafür vorgesehen, mit geringer Leistung eine möglichst große Entfernung zwischen zwei Punkten zu überbrücken bzw. ein sehr stark gedämpftes Nutzsignal aus dem Rauschen herauszufiltern. Es gibt mehrere differierende Spreizverfahren. Eines davon ist die Chirp Spread Spektrum Modulation (CSS). Diese Form der Streuspektrum-Übertragung verwendet sogenannte Chirp-Impulse, bei denen die Frequenz über die zeitliche Länge des Impulses variiert, dies ist beispielhaft in Figur 1 dargestellt. Ein schmalbandiges Messdatensignal des Sensors wird in ein Signal mit größerer Bandbreite, d. h. einer Bandbreite, die größer als die des ursprünglichen Messdatensignals des Sensors ist, umgewandelt. Das Verfahren ist robust und erfordert keine hochgenaue Synchrontaktung zwischen Sender und Empfänger.

Die vorliegende Erfindung setzt das CSS-Verfahren unter unüblichen Bedingungen ein, nämlich kurzer Übertragungslänge aber mit einer sehr hohen Dämpfung.

In einer Ausgestaltung der erfindungsgemäßen Funksonde ist das oberirdische Gateway in einer Entfernung von 300m, bevorzugt von 100m von der unterirdischen Behälteranlage entfernt angeordnet. Das hat den Vorteil, dass mehrere erfindungsgemäße Funksonden, die sich im 300m-, bevorzugt 100m-Radius des Gateways befinden, dieses gemeinsam nutzen können und dass das Gateway auch als Anzeige-Terminal in einem nahe gelegenen Gebäude installiert werden kann. Die bevorzugte Ausgestaltung der Funksonde mit einem in 100m Entfernung angeordneten oberirdischen Gateway bietet einen optimalen Kompromiss zwischen einer sicheren und zuverlässigen Übertragung des modifizierten Messdatensignals aus einem unterirdischen Erd-Dom an das oberirdische Gateway und einer sicheren Weiterverarbeitung / -leitung der Daten ins Internet für die Mehrzahl der Einsatz- und Anwendungsgebiete sowie Umgebungsbedingungen. Das oberirdische Gateway muss kein LoRaWAN-Gateway sein.

In einer weiteren Ausgestaltung der erfindungsgemäßen Funksonde, umfasst die Funksonde einen Hall-Sensor zur Gewinnung elektronischer Befüllungsdaten von mechanisch-magnetischen Tauchsonden.

In einer anderen Ausgestaltung der erfindungsgemäßen Funksonde, weist die Funksonde einen Sensor zur Messung der Temperatur oder einen Sensor zur Messung des Druckes oder einen Sensor zur Messung der Feuchte oder einen Sensor zur Messung der Beschleunigung auf. Damit können alle wichtigen Daten, die aus einer Ex-Zone zur Kenntnis gelangen müssen, ermittelt werden.

Die Aufgabe der vorliegenden Erfindung wird ebenfalls mit einem Verfahren gemäß dem unabhängigen Verfahrensanspruch 5 gelöst.

Das erfindungsgemäße Verfahren zur zuverlässigen drahtlosen Übertragung von Messsignalen aus einer unterirdischen Behälteranlage an ein oberirdisches Gateway, das die Funksonde nach einem der Ansprüche 1 bis 4 nutzt, weist folgende Schritte auf:
- Umwandeln eines schmalbandigen Messsignals in ein breitbandiges Signal mittels Frequenzspreizung, wobei dafür Chirp-Impulse verwendet werden, deren Frequenz über eine zeitliche Länge des Chirp-Impulses variiert,
- Übertragen des umgewandelten Messsignals an das oberirdische Gateway, welches in einer maximalen Entfernung von 300m, bevorzugt 100m zur Funksonde angeordnet ist und
- Übertragen des Messsignals durch das Gateway zu einer webbasierten Telemetrie-Leitstelle, nach einem frei wählbaren Netzprotokoll.

In einer besonders vorteilhaften Weise wird die erfindungsgemäße Funksonde zur zuverlässigen drahtlosen Übertragung von Messsignalen aus einer unterirdischen Behälteranlage an ein oberirdisches Gateway verwendet, gemäß Anspruch 7, wobei die Funksonde mindestens einen Sensor zur Aufnahme von Messdaten, ein Übertragungsmodul zur Übertragung von digitalen Signalen an das oberirdisches Gateway, einen Mikro-Controller zur Steuerung des mindestens einen Sensors und des Übertragungsmoduls sowie eine autarke Stromversorgung aufweist, wobei das Übertragungsmodul ausgebildet ist mittels einer Punkt-zu-Punkt-Übertragung mit Frequenzspreizung ein schmalbandiges Messdatensignal des Sensors in ein Signal mit größerer Bandbreite umzuwandeln und an das oberirdische Gateway zu übertragen, wobei die Frequenzspreizung durch eine Chirp-Spread Spektrum (CSS) Modulation erfolgt, wobei eine Kommunikation zwischen dem Übertragungsmodul und dem Gateway Netzprotokollunabhängig erfolgt, wobei die unterirdische Behälteranlage als ein Tank ausgebildet ist, in dem eine mechanisch-magnetische Tauchsonde angeordnet ist.

Bisherige Lösungen zur Fernübertragung von Messdaten aus Erd-Domen oder anderen Behälteranlagen, wie im Speziellen unterirdische Tanks, sind mit erheblichen Einschränkungen verbunden, die eine einheitliche, flächendeckende Ausrüstung von Flüssiggas-Lagerbehältern mit Fernüberwachung nicht zulassen. Funklösungen mit Bluetooth, Betriebs- oder Mess-Funk (ISM) können die starke Dämpfung nicht oder für eine Fernübertragung nicht ausreichend überwinden. Mobilfunk (GSM, GPRS, UMTS, LTE) sind nur oberhalb der Erdoberfläche einsetzbar. Die Sendeleistung ist, z. B. im ISM (Industrial, Scientific and Medical Band) oder im konventionellen Betriebsfunk begrenzt und würde zu viel Energie benötigen.

Des Weiteren sind alle bisherigen Lösungen leitungsgebunden: Antennenleitungen, Stromversorgungsleitungen, eigensichere Datenleitungen. Sowohl der zulassungsseitige Aufwand (ATEX-Richtlinie 2014/34/EU) als auch der erforderliche Tiefbau zur Leitungsverlegung verteuern die Systeme jedoch in der Anschaffung und in der Betreibung. Unterschiedliche Ausrüstungen, je nach den Einsatzbedingungen bringen darüber hinaus aufgrund proprietärer Protokolle der Hersteller Probleme bei der einheitlichen Leitstellengestaltung und Datenverarbeitung mit sich. Dies behindert auch die zunehmende Digitalisierung und Vernetzung von Prozessen.

Die hier vorliegende Erfindung verändert die o. g. aktuelle Situation grundlegend. Die beschriebene Lösung, insbesondere die Verwendung der Funksonde an unterirdischen Tankbehältern, ist in allen derzeit bekannten Szenarien der Fernübertragung von Messdaten, insbesondere der Füllstandsfernübertragung, einheitlich, auch oberirdisch, verwendbar. Alle Komponenten arbeiten nach einheitlichen, weltweit standardisierten und allgemein genehmigten Funkverfahren.

Die Erfindung soll nachfolgend an einem Ausführungsbeispiel näher erläutert werden.
- Fig. 1: Chirp-Impuls zur Verwendung bei der Chirp Spread Spectrum Modulation (Stand der Technik);
- Fig. 2: Erfindungsgemäße Funksonde für den Einsatz in einer unterirdischen Behälteranlage, insbesondere an einem unterirdischen Tank.

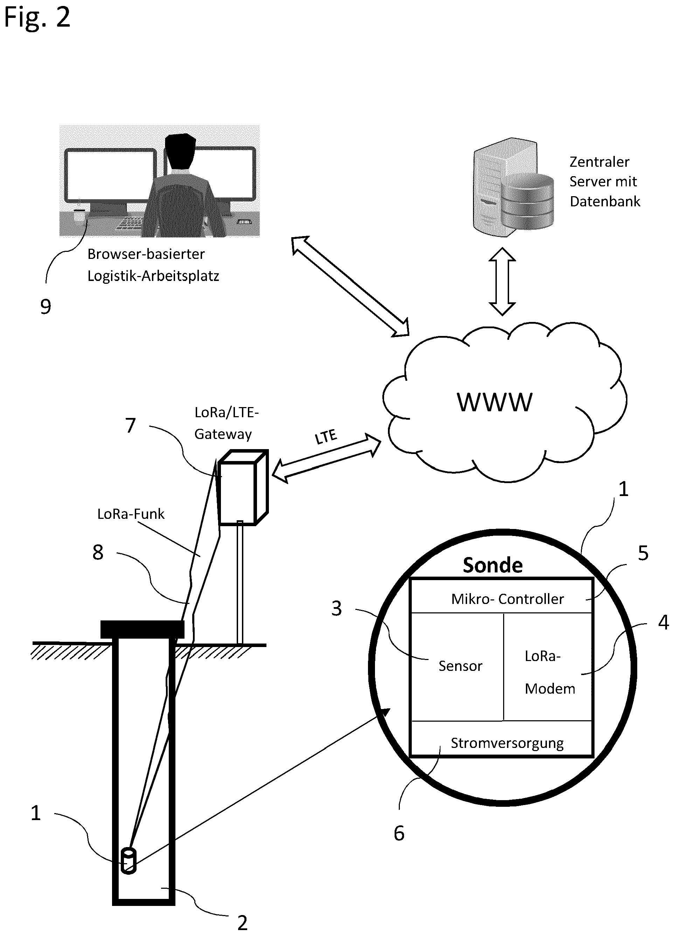

Figur 2 zeigt eine Ausführungsform der Datenfernübertragung mittels der erfindungsgemäßen Funksonde 1, die bestens für den Einsatz in einer unterirdischen Behälteranlage 2 geeignet ist.

Eine im Erdschacht 2 am Flüssiggastank oder einer anderen Behälteranlage montierte Funksonde 1 ermittelt mittels Hall-Sensor 3 und nachgeschalteter elektronischer Datenauswertung den aktuellen Behälterinhalt in Prozent, oder mittels eines anderen weiteren Sensors 3 einen weiteren Messwert, welcher auf dem Display der Sonde 1 angezeigt wird. Parallel werden die Füllstandsdaten oder anderen Messdaten mittels eines Funkübertragungsmoduls 4 mit Frequenzspreiz-Modulation versendet. Die Modulationsart ermöglicht die Durchdringung der Schirmung der Stahlummantelung des Domschachtes 2 und des umgebenden Erdreiches sowie der Stahlabdeckung des Schachtes. In Messversuchen wurde nachgewiesen, dass das Signal je nach Tiefe und Beschaffenheit des Schachtes oberhalb der Erdoberfläche im Abstand von 50-300 m fehlerfrei zu empfangen ist. Dies ist technisch hinreichend, um außerhalb des explosionsgefährdeten Bereiches z. B. ein LTE-Gateway 7 zu installieren, welches mittels eines geeigneten Empfangsmodems die Füllstanddaten oder anderen Messdaten empfängt und mittels des z. B. integrierten LTE-Modems ins Internet und an einen Server überträgt. Dieser legt die Daten in einer Datenbank zur Archivierung und weiteren Verarbeitung ab. Software-Skripte sorgen für eine entsprechende Datenaufbereitung. Die Visualisierung und Fernbetreibung des Systems erfolgt browserbasiert an Logistik-Arbeitsplätzen 9. Figur 2 zeigt schematisch den beschriebenen Informationsfluss.

Kerngedanke der Erfindung ist es, eine Funksonde für den Einsatz in Erd-Domen bereitzustellen, die das Verfahren der Frequenzspreizung für eine Punkt-zu-Punkt-Übertragung zu einem oberirdisch installierten Gateway verwendet, welches die empfangenen Messwerte via LTE/5G zu einer web-basierten Telemetrie-Leitstelle überträgt. Die Verwendung der Funksonde mit einem Übertragungsmodul, insbesondere in Kombination mit einer Tauchsonde und in der Ausgestaltung eines LoRa-Modems, welches die Punkt-zu-Punkt-Übertragung mit Frequenzspreizung umsetzt, ist für den unüblichen und somit nicht naheliegenden Einsatz an einem unterirdischen Tankbehälter besonders geeignet, um die gestellte Aufgabe zu lösen.

Das Gateway wird in einer bevorzugten Ausgestaltung in einer Maximalentfernung von 100 m vom Tank-Dom installiert. Entfernungen bis 300m sind ebenfalls zuverlässig realisierbar.

Erfindungsgemäß wird die LoRa-WAN-Technologie für die Funksonde auf eine Kurzstrecken-Punkt-zu-Punkt-Verbindung aus einer stark hf-geschirmten Umgebung heraus reduziert. Auf eine LoRa-WAN-Architektur mit WAN-Gateways wird jedoch komplett verzichtet. Es genügt eine sichere Übertragungsreichweite von wenigen Metern, sicher bis an die Erdoberfläche, außerhalb einer Ex-Zone.

Der Übertragungs-Teil der Funksonde 1 ist durch einen Hall-Sensor 3 mit entsprechender Hard- und Software-Umgebung und einer ATEX gemäßen autarken Stromversorgung 6 mit Energiemanagement ergänzt.

Erfindungsgemäß kann das Verfahren, bestehend aus einer Punkt-zu-Punkt-Kurzstreckenverbindung und LTE/5G-Gateway mit Funkübertragungsmodul, z. B. ein LoRa-Modem, auch für Sonden mit diversen Sensoren, z.B. für Temperatur, Druck, Feuchte und Beschleunigung, in Umgebungen mit kritischen HF-Ausbreitungsbedingungen eingesetzt werden. Für Anwendungen in Ex-Zonen ist dabei stets auf die Eigensicherheit aller eingesetzten Komponenten zu achten.

### Bezugszeichenliste

- 1: Funksonde
- 2: Unterirdische Behälteranlage, Erdschacht
- 3: Sensor
- 4: Übertragungsmodul, z. B. LoRa-Modem
- 5: Mikro-Controller
- 6: Stromversorung
- 7: Oberirdisches Gateway
- 8: Punkt-zu-Punkt-Übertragung
- 9: Webbasierte Telemetrieleitstelle

## Patentansprüche

1. Funksonde (1) zur sicheren Übertragung von Messsignalen aus einer unterirdischen Behälteranlage (2), wobei die Funksonde (1) mindestens einen Sensor (3) zur Aufnahme von Messdaten, ein Übertragungsmodul (4) zur Übertragung von digitalen Signalen an ein oberirdisches Gateway (7), einen Mikro-Controller (5) zur Steuerung des mindestens einen Sensors (3) und des Übertragungsmoduls (4) sowie eine autarke Stromversorgung (6) aufweist, **dadurch gekennzeichnet, dass** das Übertragungsmodul (4) ausgebildet ist mittels einer Punkt-zu-Punkt-Übertragung (8) mit Frequenzspreizung ein schmalbandiges Messdatensignal des Sensors (3) in ein Signal mit größerer Bandbreite umzuwandeln und an das oberirdische Gateway (7) zu übertragen, wobei die Frequenzspreizung durch eine Chirp-Spread Spektrum, CSS, Modulation erfolgt, wobei eine Kommunikation zwischen dem Übertragungsmodul (4) und dem Gateway (7) Netzprotokollunabhängig erfolgt.

2. Funksonde (1) gemäß Anspruch 1, **dadurch gekennzeichnet, dass** das Übertragungsmodul (4) ein LoRa-Modul ist.

3. Funksonde (1) gemäß Anspruch 1, **dadurch gekennzeichnet, dass** das oberirdische Gateway (7) in einer Entfernung von 300m, bevorzugt 100m von der unterirdischen Behälteranlage (2) entfernt angeordnet ist.

4. Funksonde (1) gemäß Anspruch 1, **dadurch gekennzeichnet, dass** die Funksonde (1) einen Hall-Sensor zur Gewinnung elektronischer Befüllungsdaten von mechanisch-magnetischen Tauchsonden umfasst.

5. Funksonde (1) gemäß Anspruch 1, **dadurch gekennzeichnet, dass** die Funksonde einen Sensor (3) zur Messung der Temperatur oder einen Sensor (3) zur Messung des Druckes oder einen Sensor (3) zur Messung der Feuchte oder einen Sensor (3) zur Messung der Beschleunigung aufweist.

6. Verfahren zur zuverlässigen drahtlosen Übertragung von Messsignalen aus einer unterirdischen Behälteranlage (2) an ein oberirdisches Gateway (7), dass die Funksonde (1) nach einem der Ansprüche 1 bis 5 nutzt, wobei das Verfahren folgende Schritte aufweist:
- Umwandeln eines schmalbandigen Messsignals in ein breitbandiges Signal mittels Frequenzspreizung, wobei dafür Chirp-Impulse verwendet werden, deren Frequenz über eine zeitliche Länge des Chirp-Impulses variiert,
- Übertragen des umgewandelten Messsignals an das oberirdische Gateway (7), welches in einer Entfernung von 300m, bevorzugt 100m zur Funksonde (1) angeordnet ist und
- Übertragen des Messsignals durch das Gateway (7) zu einer webbasierten Telemetrie-Leitstelle (9), nach einem frei wählbaren Netzprotokoll.

7. Verwendung einer Funksonde (1) zur sicheren Übertragung von Messsignalen aus einer unterirdischen Behälteranlage (2) an ein oberirdisches Gateway (7), wobei die Funksonde (1) mindestens einen Sensor (3) zur Aufnahme von Messdaten, ein Modem (4) zur Übertragung von digitalen Signalen an das oberirdisches Gateway (7), einen Mikro-Controller (5) zur Steuerung des mindestens einen Sensors (3) und des Modems (4) sowie eine autarke Stromversorgung (6) aufweist, wobei das Modem (4) ausgebildet ist mittels einer Punkt-zu-Punkt-Übertragung (8) mit Frequenzspreizung ein schmalbandiges Messdatensignal, des Sensors (3) in ein Signal mit größerer Bandbreite umzuwandeln und an das oberirdische Gateway (7) zu übertragen, wobei die Frequenzspreizung durch eine Chirp-Spread Spektrum, CSS, Modulation erfolgt, wobei die unterirdische Behälteranlage (2) als ein Tank ausgebildet ist, in dem eine mechanisch-magnetische Tauchsonde angeordnet ist.
